# EUROPEAN PATENT APPLICATION

(11) **EP 1 215 670 A2**
(43) Date of publication of application: **19.06.2002**
(21) Application number: 01310263.7
(22) Date of filing: 07.12.2001
(51) Int. Cl.: G11B 7/26

(54) **Film forming apparatus and film forming method**

(30) Priority: 12.12.2000 JP 2000377405; 12.12.2000 JP 2000377406
(71) Applicant: Pioneer Corporation, Meguro-ku, Tokyo (JP)
(72) Inventor: Shida,Noriyoshi, C/o Corporate Research & Develop., Tsurugashima-shi, Saitama (JP); Okano, Makoto C/o Coporate Research & Developement, Tsurugashima-shi Saitama (JP); Suga, Keiji C/o Corporate Research & Developement, Tsurugashima-shi Saitama (JP)
(74) Representative: Haley, Stephen

(57) **Abstract**

The film forming apparatus comprises: a turntable 1 which rotates an optical disc substrate 3; and a film forming liquid supplying device 2 which supplies an ultraviolet curing resin 4 onto the optical disc substrate 3. While the optical disc substrate 3 is rotated by the turntable 1, the ultraviolet curing resin 4 is supplied onto the optical disc substrate 3 by the film forming liquid supplying device 2.

## Description

The present invention relates to a film forming apparatus and a film forming method in which a film can be formed while controlling the thickness of the film.

A cover layer which covers a surface of an optical disc has the thickness of about 100 µm. As a method of forming such a layer, known is a method using a spin coater. In the method, an ultraviolet curing resin is dropped on an optical disc substrate which is placed on a turntable, and the optical disc substrate is then rotated at a high speed by the turntable, whereby the ultraviolet curing resin is spread over the entire face of the optical disc substrate. This method is advantageous from the viewpoint of the production cost, because a resin which is spun off from the spin coater can be reused.

In an optical disc substrate, an opening is formed in the center thereof. Therefore, there arises a problem in that it is difficult to form a uniform cover layer because of a positional relationship between a position to which an ultraviolet curing resin is supplied and a position where the cover layer is formed. That is, there is a problem in that, when the ultraviolet curing resin is dropped in the inner peripheral area of the substrate and then spun off by high-speed rotation, the film thickness distribution of the ultraviolet curing resin is formed so as to be thin in the inner peripheral area and thick in the outer peripheral area. When the resin dropping position is moved to a further inward position in order to uniformalize the film thickness, there arises other problems such as that the resin leaks through the opening of the optical disc substrate to soil the turntable.

It is an object of the invention to provide a film forming apparatus and a film forming method in which a film can be formed while controlling the thickness of the film.

The film forming apparatus according to the invention is characterized in that the apparatus comprises: a rotating unit (1) for rotating a substrate (3); and a film forming jig (2) which is to be placed on the substrate (3), and in a state where a film forming liquid (4) is supplied to contact with an outer periphery of the film forming jig (2), the rotation unit (1) rotates to form a film (4A).

In the film forming apparatus, since the rotating unit is rotated under a state where the film forming liquid is supplied so as to be in contact with the outer periphery of the film forming jig placed on the substrate, the difference in film thickness between inner and outer peripheral sides of the substrate can be controlled. Therefore, for example, a uniform film thickness is obtained over the entire area.

The film forming jig (2) may have any one of a substantially cylindrical shape (2), a substantially conical shape (22), and a substantially truncated conical shape (21, 23).

The film forming method according to the invention is characterized in that the method comprises the steps of: placing a film forming jig (2) on a substrate (3); supplying film forming liquid (4) to be in contact with an outer periphery of the film forming jig (2); and rotating the substrate (3).

In the film forming method, since the rotating unit is rotated under a state where the film forming liquid is supplied so as to be in contact with the outer periphery of the film forming jig placed on the substrate, the difference in film thickness between inner and outer peripheral sides of the substrate can be controlled. Therefore, for example, a uniform film thickness is obtained over the entire area.

The film forming apparatus according to the invention is characterized in that the apparatus comprises: a rotating unit (101) for rotating a substrate (103); and a film forming liquid supplying device (102) for supplying film forming liquid (104) onto the substrate (103) during rotation of the rotating unit (101).

In the film forming apparatus, since the film forming liquid is supplied during a period when the substrate is rotated, the film thickness can be adequately controlled. For example, the thickness of a film in the vicinity of a portion to which the film forming liquid is supplied can be increased. In this case, the rotational speed of the rotating unit may be changed during the supply of the film forming liquid, or the supplied amount of the film forming liquid during rotation of the rotating unit may be changed. The supply of the film forming liquid may be started before the rotation of the rotating unit is started.

A non-film-forming region (103a) to which the film forming liquid is not applied may be disposed in the substrate (103), and the film forming liquid supplying device (102) may supply the film forming liquid (104) to a region outside the non-film-forming region (103a). In this case, the film forming liquid is supplied to the region outside the non-film-forming region, the film forming liquid is spread further outward by the centrifugal force due to the rotation of the substrate, and hence the film is formed in only the region outside the non-film-forming region.

The film forming liquid supplying device (102) may comprise a liquid reservoir (131) for storing the film forming liquid (104), and the film forming liquid (104) stored in the liquid reservoir (131) may be supplied onto the substrate (103) through a supply port (132) communicating with the liquid reservoir (131). For example, the supply port may be a slit or a nozzle.

The film forming liquid (104) may be supplied through the supply port (133) by applying an air pressure to the film forming liquid (104) stored in the liquid reservoir (131). In this case, the film forming liquid can be surely supplied without using, for example, a centrifugal force. The supplied amount of the film forming liquid can be controlled by adjusting the air pressure. The air pressure may be changed during the rotation of the rotating unit.

The liquid reservoir (131) may be rotatable together with the rotating unit (101).

The film forming liquid (104) may be supplied through the supply port (133) by applying a centrifugal force due to the rotation of the rotating unit (201) to the film forming liquid (104) stored in the liquid reservoir (131). In this case, the film forming liquid may be supplied by the centrifugal force without applying an air pressure to the liquid reservoir.

The substrate may be an optical disc substrate (103).

The film forming method according to the invention is characterized in that the method comprises the steps of supplying a film forming liquid (104) onto a substrate (103) while the substrate (103) is rotated.

In the film forming method, since the film forming liquid is supplied during a period when the substrate is rotated, the film thickness can be adequately controlled. For example, the thickness of a film in the vicinity of a portion to which the film forming liquid is supplied can be increased. In this case, the rotational speed of the rotating unit may be changed during the supply of the film forming liquid, or the supplied amount of the film forming liquid during the rotation of the rotating unit may be changed. The supply of the film forming liquid may be started before the rotation of the rotating unit is started.

A non-film-forming region (103a) to which the film forming liquid (104) is not applied may be disposed in the substrate (103), and the film forming liquid supplying device (102) may supply the film forming liquid to a region outside the non-film-forming region (103a). In this case, the film forming liquid is supplied to the region outside the non-film-forming region, the film forming liquid is spread further outward by the centrifugal force due to rotation of the substrate, and hence the film is formed in only the region outside the non-film-forming region.

The method may further comprise the steps of storing the film forming liquid (104) into a liquid reservoir (131), and, in the supplying step, the film forming liquid (104) stored in the liquid reservoir (131) is supplied onto the substrate (103) through a supply port (132) communicating with the liquid reservoir (131). For example, the supply port may be a slit or a nozzle.

In the supplying step, the film forming liquid (104) may be supplied through the supply port (132) by applying an air pressure to the film forming liquid (104) which is stored in the liquid reservoir (131). In this case, the film forming liquid can be surely supplied without using, for example, a centrifugal force. The supplied amount of the film forming liquid can be controlled by adjusting the air pressure. The air pressure may be changed during the rotation of the rotating unit.

The liquid reservoir (131) may be rotatable together with the rotating unit (101).

A centrifugal force due to rotation of the rotating unit (201) may be applied to the film forming liquid (104) stored in the liquid reservoir, whereby the film forming liquid (104) is supplied through the supply port (133). In this case, the film forming liquid may be supplied by the centrifugal force without applying an air pressure to the liquid reservoir.

The substrate may be an optical disc substrate (103).

In order to facilitate understanding of the invention, the reference numerals used in the accompanying drawings are added in the parentheses. However, it is to be understood that the addition of the reference numerals is not intended as a limitation of the invention to illustrated embodiments.

### In the Drawings;

Fig. 1 is a view showing a film forming apparatus of a first embodiment in which Fig. 1A is a section view showing the film forming apparatus of the first embodiment, and Fig. 1B is a partial enlarged section view of Fig. 1A.

Fig. 2 is a view showing a ring, and Fig. 2A is a plan view of the ring as viewed from the top of Fig. 1, and Fig. 2B is a section view taken along line IIB-IIB of Fig. 2A.

Fig. 3 is a view showing a formed cover layer in which Fig. 3A is a view which shows in the form of a graph an average film thickness of cover layers that were formed by using the film forming apparatus of the first embodiment, and Fig. 3B is a section view showing the cover layer.

Fig. 4 is a section view showing a film forming apparatus of a second embodiment.

Fig. 5 is a view showing a ring, and Fig. 5A is a plan view of the ring as viewed from the top of Fig. 4, and Fig. 5B is a section view taken along line VB-VB of Fig. 5A.

Fig. 6 is a view which shows in the form of a graph an average film thickness of cover layers that were formed by using the film forming apparatus of the second embodiment.

Fig. 7 is a section view showing a film forming apparatus of a third embodiment.

Fig. 8 is a view showing a film forming jig, and Fig. 8A is a plan view of the film forming jig as viewed from the top of Fig. 7, and Fig. 8B is a section view taken along line VIIIB-VIIIB of Fig. 8A.

Fig. 9 is a section view showing a film forming apparatus of a fourth embodiment.

Fig. 10 is a view showing a ring, and Fig. 10A is a plan view of the ring as viewed from the top of Fig. 9, and Fig. 10B is a section view taken along line XB-XB of Fig. 10A.

Fig. 11 is a view which shows in the form of a graph an average film thickness of cover layers that were formed by using the film forming apparatus of the fourth embodiment.

Fig. 12 is a view which shows in the form of a graph film thickness of cover layers in a comparative example.

Fig. 13 is a section view showing a film forming apparatus of a fifth embodiment.

Fig. 14 is a section view take along line II-II in Fig. 13.

Fig. 15 is a section view showing a manner of supplying an ultraviolet curing resin by a film forming apparatus 1000.

Fig. 16 is a section view showing a state where a cover layer is formed on an optical disc substrate.

Fig. 17 is a section view showing a film forming apparatus of a sixth embodiment.

Fig. 18 is a section view showing a manner of supplying an ultraviolet curing resin by a film forming apparatus 2000.

### - First embodiment -

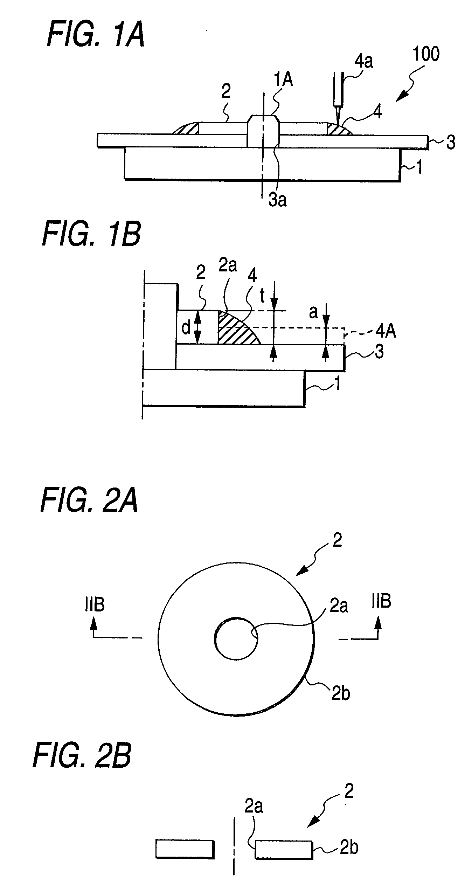

Hereinafter, a film forming apparatus according to a first embodiment of the invention will be described with reference to Figs. 1 and 2. Fig. 1A is a section view showing the film forming apparatus of the first embodiment, Fig. 1B is a partial enlarged view of Fig. 1A, Fig. 2A is a plan view of a ring as viewed from the top of Fig. 1, and Fig. 2B is a section view taken along line IIB-IIB of Fig. 2A.

As shown in Figs. 1 and 2, the film forming apparatus 100 of the first embodiment comprises: a turntable 1 of a spin coater on which an optical disc substrate 3 is to be placed; and a ring 2 which is to be placed on the optical disc substrate 3. The rotation shaft 1A of the turntable 1 has an outer diameter which is slightly smaller than the inner diameter of an opening 3a which is formed in the center of the optical disc substrate 3. The ring 2 has a cylindrical shape. The inner diameter of an opening 2a which is formed in the center of the ring 2 is slightly larger than the outer diameter of the rotation shaft 1A of the turntable 1. The ring 2 can be produced by using a metal such as aluminum, stainless steel (SUS) or the like, or various resins such as an acrylic resin, Derlin, a polycarbonate resin, a polypropylene resin, a polyethylene resin, and the like.

Next, the procedure of forming a cover layer on the optical disc substrate 3 by using the film forming apparatus 100 will be described. As shown in Fig. 1, the optical disc substrate 3 is positioned on the turntable 1, and the ring 2 is placed on the optical disc substrate 3. At this time, both the opening 3a of the optical disc substrate 3 and the opening 2a of the ring 2 are engaged with the rotation shaft 1A of the turntable 1. Then, an ultraviolet curing resin 4 is dropped from a supply pipe 4a so as to be in contact with an outer peripheral face 2b of the ring 2. At this time, as shown in Fig. 1B, the ultraviolet curing resin 4 adheres to the outer peripheral face 2b so as to reach a position t which is higher in level than the thickness a of a cover layer 4A which will be finally formed. In order to control the film thickness so as to be uniform, therefore, the thickness d of the ring 2 is required not to be smaller than the thickness a of the cover layer 4A which will be formed.

Then, the turn table 1 is rotated at a high speed to spin off an excess amount of the ultraviolet curing resin 4, whereby a film of the ultraviolet curing resin 4 is formed on the surface of the optical disc substrate 3. Thereafter, the film of the ultraviolet curing resin 4 is irradiated with ultraviolet rays so that the ultraviolet curing resin 4 cures to form the cover layer 4A. The ultraviolet curing resin 4 which is spun off by rotation of the turntable 1 may be recycled and reused.

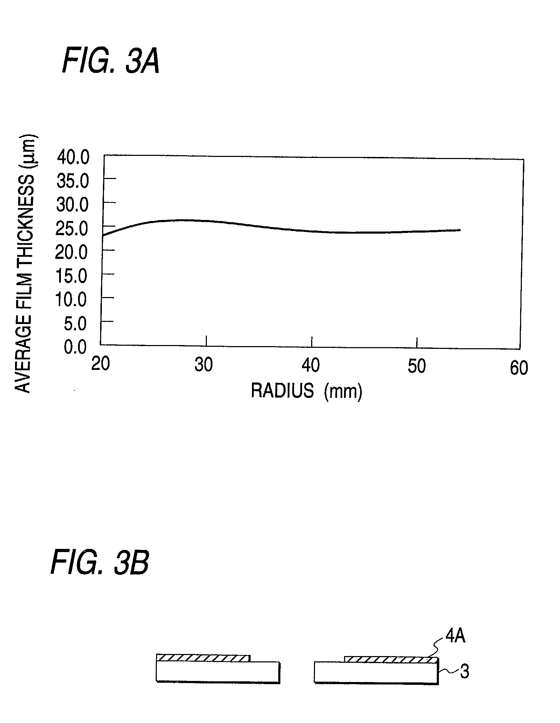

Fig. 3A is a view which shows in the form of a graph an average film thickness of cover layers that were formed by using the film forming apparatus of the first embodiment, and Fig. 3B is a section view of the optical disc substrate showing the cover layer. In Fig. 3A, the ordinate indicates the thickness of the cover layer 4A shown in Fig. 3B, and the abscissa indicates the distance (radius) from the center of the optical disc substrate 3.

The film formation was conducted under conditions that, after the ultraviolet curing resin 4 was dropped, the turn table 1 was rotated at 700 rpm for 60 seconds.

As apparent from comparison with a comparative example which will be described later, in the first embodiment, the film thickness in the inner peripheral side of the optical disc substrate 3 is not largely different from that in the outer peripheral side, and a film thickness which is more uniform is obtained over the entire area of the substrate 3.

### - Comparative example -

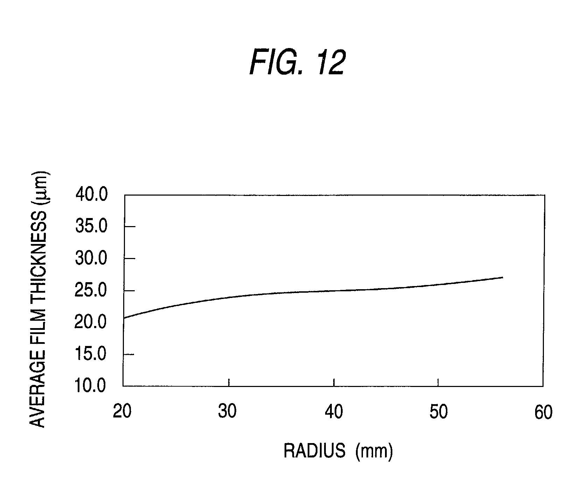

Fig. 12 shows an average film thickness in a case where the ring 2 in the first embodiment was not used, an ultraviolet curing resin was supplied to the same position as that in the first embodiment, and the same film forming conditions were employed.

In the comparative example, as shown in Fig. 12, the film thickness in the inner peripheral side of the optical disc substrate is small, and that in the outer peripheral side is large, with the result that a uniform film thickness cannot be obtained over the entire area of the substrate.

### - Second embodiment -

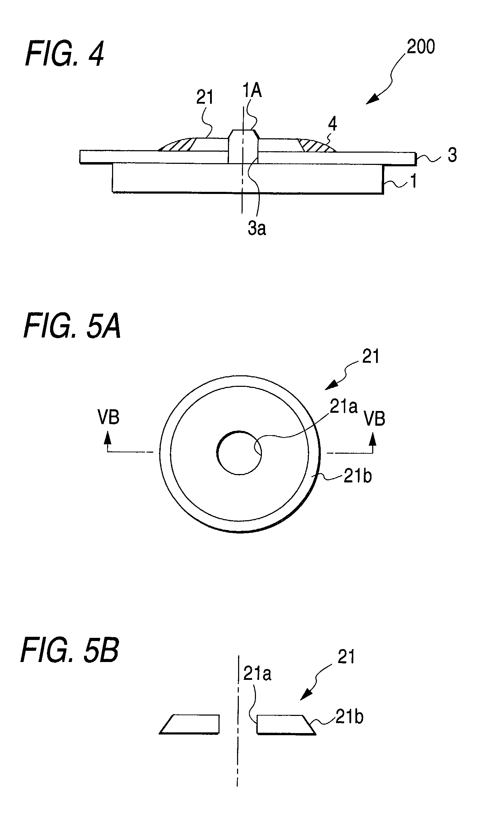

Hereinafter, a film forming apparatus according to a second embodiment of the invention will be described with reference to Figs. 4 to 6. Fig. 4 is a section view showing the film forming apparatus of the second embodiment, Fig. 5A is a plan view of a ring as viewed from the top of Fig. 4, and Fig. 5B is a section view taken along line VB-VB of Fig. 5A. The components identical with those of the first embodiment are denoted by the same reference numerals, and their description is omitted.

In the film forming apparatus 200 of the second embodiment, a ring 21 is used in place of the ring 2 of the first embodiment. As shown in Figs. 4 and 5, the ring 21 has a substantially truncated conical shape, and the inner diameter of an opening 21a which is formed in the center of the ring 21 is slightly larger than the outer diameter of the rotation shaft 1A of the turntable 1. An outer peripheral face 21b of the ring 21 is formed to incline with respect to a surface contacting with the optical disk substrate 3 so that the sectional area is further increased. The ring 21 can be produced by using a metal such as aluminum, stainless steel (SUS), or the like, or various resins such as an acrylic resin, Derlin, a polycarbonate resin, a polypropylene resin, a polyethylene resin, or the like.

When a cover layer is to be formed on the optical disc substrate 3 by using the film forming apparatus 200, the ultraviolet curing resin 4 is dropped so as to be in contact with the outer peripheral face 21b of the ring 21. The other steps and the conditions for rotation of the turn table 1 are identical with those of the first embodiment. The ultraviolet curing resin 4 adheres to the outer peripheral face 21b so as to reach a position which is higher in level than the thickness of a cover layer which will be finally formed. In order to control the film thickness so as to be uniform, therefore, the ring 21 is required not to be thinner than the cover layer which will be formed.

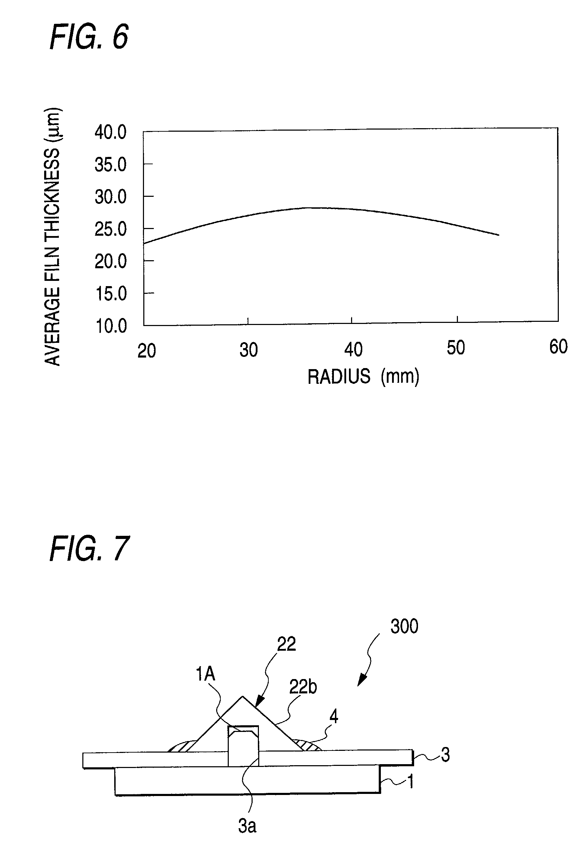

Fig. 6 is a view which shows in the form of a graph an average film thickness of cover layers that were formed by using the film forming apparatus of the second embodiment. In Fig. 6, the ordinate indicates the thickness of the cover layer, and the abscissa indicates the distance (radius) from the center of the optical disc substrate 3.

As apparent from comparison with the comparative example, in the second embodiment, the film thickness in the inner peripheral side of the optical disc substrate 3 is not largely different from that in the outer peripheral side, and a film thickness which is more uniform is obtained over the entire area of the substrate 3.

### - Third embodiment -

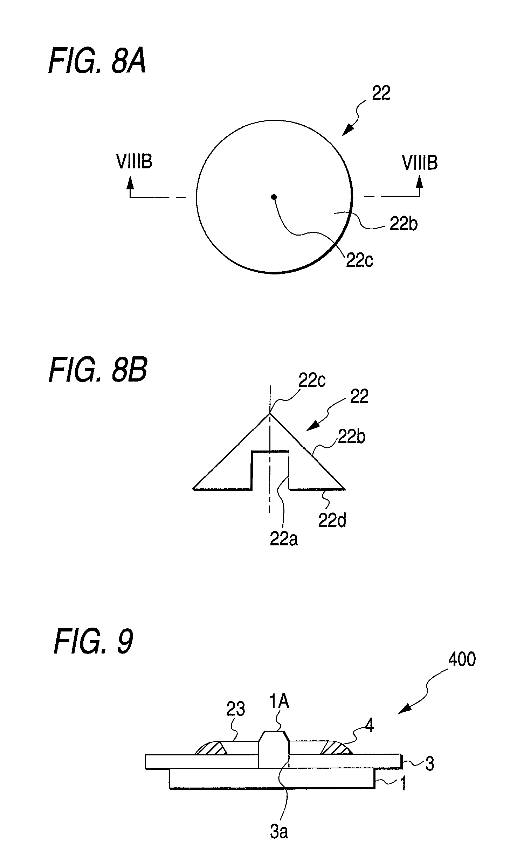

Hereinafter, a film forming apparatus according to a third embodiment of the invention will be described with reference to Figs. 7 and 8. Fig. 7 is a section view showing the film forming apparatus of the third embodiment, Fig. 8A is a plan view of a film forming jig as viewed from the top of Fig. 7, and Fig. 8B is a section view taken along line VIIIB-VIIIB of Fig. 8A. The components identical with those of the second embodiment are denoted by the same reference numerals, and their description is omitted.

In the film forming apparatus 300 of the third embodiment, a film forming jig 22 is used in place of the ring 21 of the second embodiment. As shown in Figs. 7 and 8, the film forming jig 22 has a substantially conical shape having a vertex 22c, and the inner diameter of a hole 22a which is formed in the center of the film forming jig 22 is slightly larger than the outer diameter of the rotation shaft 1A of the turntable 1. An outer peripheral face 22b of the film forming jig 22 is inclinedly formed so as to become wider as moving toward the face contacting with the optical disc substrate 3. A face 22d corresponding to a lower face of a cone is in contact with the surface of the optical disc substrate 3. The film forming jig 22 can be produced by using a metal such as aluminum, stainless steel (SUS), or the like, or various resins such as an acrylic resin, Derlin, a polycarbonate resin, a polypropylene resin, a polyethylene resin, or the like.

When a cover layer is to be formed on the optical disc substrate 3 by using the film forming apparatus 300, the ultraviolet curing resin 4 is dropped so as to be in contact with the outer peripheral face 22b of the film forming jig 22. Since the film forming jig 22 has a substantially conical shape, the ultraviolet curing resin 4 which has been once dropped on the outer peripheral face 22b downward moves along the outer peripheral face 22b to a position contacting with the optical disc substrate 3. Therefore, the dropping position of the resin 4 may be changed to a position which is located more inward than that in the second embodiment.

When the other steps and the conditions for rotation of the turn table 1 are set to be identical with those of the second embodiment, it is possible to attain the same result as that of the second embodiment.

### - Fourth embodiment -

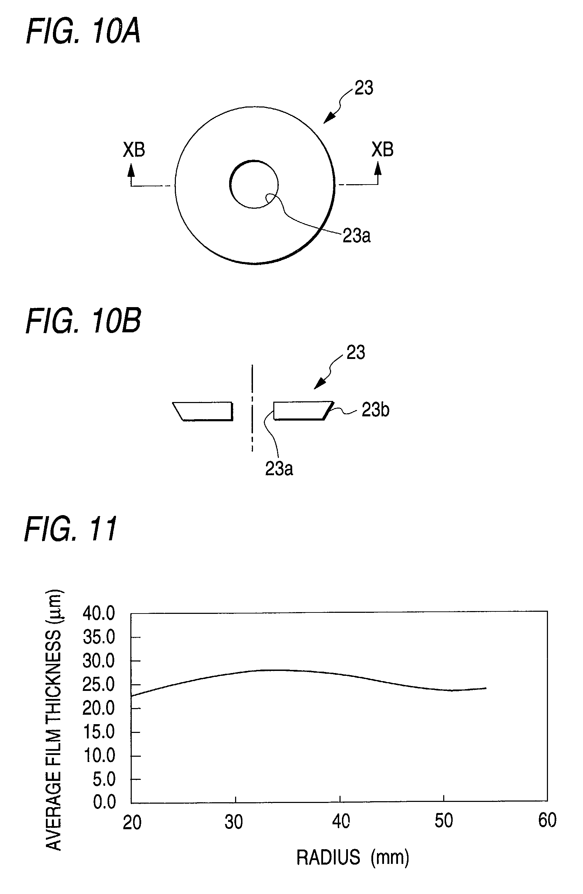

Hereinafter, the film forming apparatus according to a fourth embodiment of the invention will be described with reference to Figs. 9 to 11. Fig. 9 is a section view showing the film forming apparatus of the fourth embodiment, Fig. 10A is a plan view of a ring as viewed from the top of Fig. 9, and Fig. 10B is a section view taken along line XB-XB of Fig. 10A. The components identical with those of the first embodiment are denoted by the same reference numerals, and their description is omitted.

In the film forming apparatus 400 of the fourth embodiment, a ring 23 is used in place of the ring 2 of the first embodiment. As shown in Figs. 9 and 10, the ring 23 has a substantially truncated conical shape, and the inner diameter of an opening 23a which is formed in the center of the ring 23 is slightly larger than the outer diameter of the rotation shaft 1A of the turntable 1. An outer peripheral face 23b of the ring 23 is formed to incline with respect to a face contacting with the optical disc substrate 3 so that the sectional area is further decreased. The ring 23 can be produced by using a metal such as aluminum, stainless steel (SUS), or the like, or various resins such as an acrylic resin, Derlin, a polycarbonate resin, a polypropylene resin, a polyethylene resin, or the like.

When a cover layer is to be formed on the optical disc substrate 3 by using the film forming apparatus 400, the ultraviolet curing resin 4 is dropped so as to be in contact with the outer peripheral face 23b of the ring 23. The other steps and the conditions for rotation of the turn table 1 are identical with those of the first embodiment. The ultraviolet curing resin 4 adheres to the outer peripheral face 23b so as to reach a position which is higher in level than the thickness of a cover layer which will be finally formed. In order to control the film thickness so as to be uniform, therefore, the ring 23 is required not to be thinner than the cover layer which will be formed.

Fig. 11 is a view which shows in the form of a graph an average film thickness of cover layers that were formed by using the film forming apparatus of the fourth embodiment. In Fig. 11, the ordinate indicates the thickness of the cover layer, and the abscissa indicates the distance (radius) from the center of the optical disc substrate 3.

As apparent from comparison with the comparative example, in the fourth embodiment, the film thickness in the inner peripheral side of the optical disc substrate 3 is not largely different from that in the outer peripheral side, and a film thickness which is more uniform is obtained over the entire area of the substrate 3.

The invention is not limited to the first to fourth embodiments. In place of the turntable, a rotating unit for, placed above the substrate, sucking the surface of the substrate to rotate may be used.

For example, the control may not only be performed so as to uniformalize the film thickness, but may be performed so that the film thickness in the inner peripheral side of the substrate is larger than that of another portion.

In place of the ultraviolet curing resin, a thermosetting resin may be used.

The outer peripheral face of the film forming jig may be configured as a curved face, or the film forming jig may have a substantially cylindrical shape, a substantially conical shape, a substantially truncated conical shape, a substantially hemispherical shape, or the like.

### - Fifth embodiment -

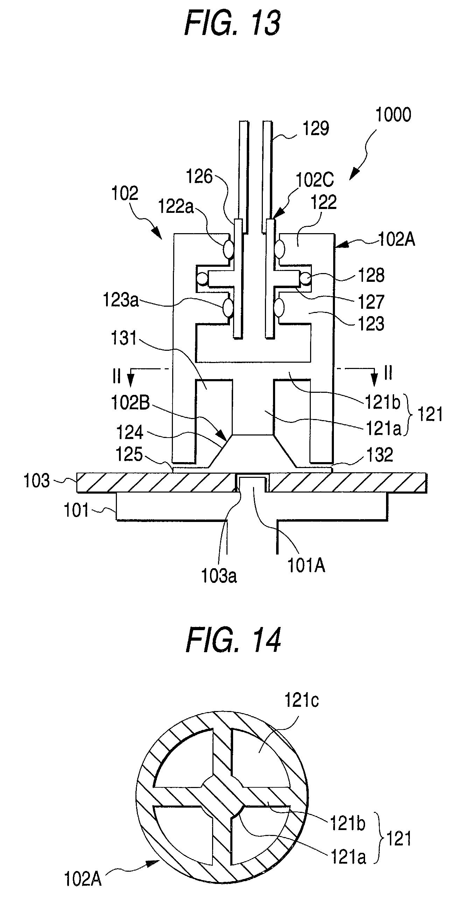

Hereinafter, a film forming apparatus according to a fifth embodiment of the invention will be described with reference to Figs. 13 to 16. Fig. 13 is a section view showing the film forming apparatus of this embodiment, and Fig. 14 is a section view take along line II-II in Fig. 13.

As shown in Figs. 13 and 14, the film forming apparatus 1000 of the embodiment comprises: a turntable 101 of a spin coater on which an optical disc substrate 103 is to be placed; and a film forming liquid supplying device 102 which is placed above the optical disc substrate 103.

The film forming liquid supplying device 102 comprises: a cylindrical portion 102A which generally has a substantially cylindrical shape; a fixing portion 102B which is connected to the cylindrical portion 102A; and an insertion portion 102C which is inserted into the cylindrical portion 102A in a rotatable manner.

In the cylindrical portion 102A, a support portion 121 for supporting the fixing portion 102B is formed. The support portion 121 comprises: a column portion 121a which has a columnar shape and is to be connected to the fixing portion 102B; and beam portions 121b which protrude toward the inside of the cylindrical portion 102A to support the column portion 121a. Openings 121c through which the interior 131 of the cylindrical portion 102A vertically communicates are formed among the beam portions 121b. In the cylindrical portion 102A, flanges 122 and 123 are projected toward the inside of the cylindrical portion 102A. An O-ring 122a serving as a packing is fitted into the inner peripheral face of the flange 122, and an O-ring 123a serving as a packing is fitted into the inner peripheral face of the flange 123.

The fixing portion 102B has a truncated conical portion 124 and a disc portion 125 which is connected to the lower face of the truncated conical portion 124. The upper face of the truncated conical portion 124 is joined to the lower face of the column portion 121a. The lower face of the disc portion 125 is contactable with the upper face of the optical disc substrate 103.

The insertion portion 102C comprises a cylindrical portion 126 and a flange 127 which outward protrudes from the cylindrical portion 126. As shown in Fig. 13, a bearing 128 is sandwiched between the outer peripheral face of the flange 127 and the inner wall face of the cylindrical portion 102A which is interposed between the flanges 122 and 123. The O-ring 122a above the flange 127 and the O-ring 123a below the flange 127 are in contact with the outer peripheral face of the cylindrical portion 126. A supply pipe 129 is connected to an upper end portion of the cylindrical portion 126 of the insertion portion 102C.

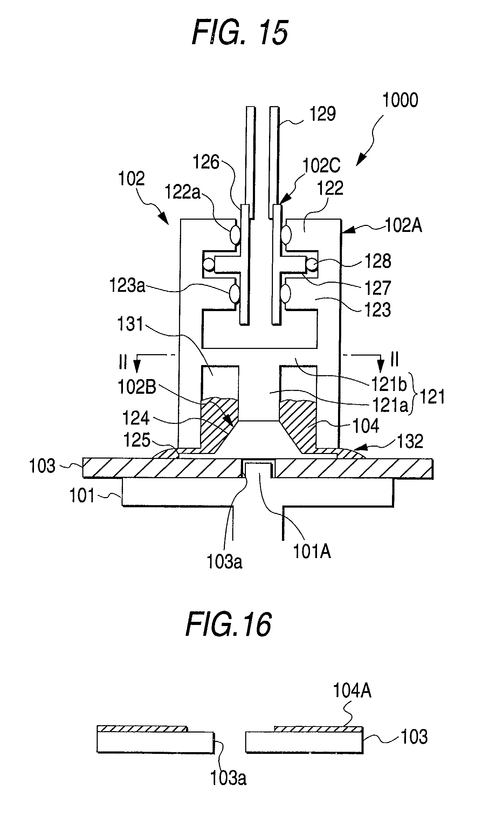

Next, the procedure of forming a cover layer on the optical disc substrate 103 by using the film forming apparatus 1000 will be described with reference to Figs. 15 and 16. Fig. 15 is a section view showing a manner of supplying an ultraviolet curing resin by the film forming apparatus 1000, and Fig. 16 is a section view showing a state where the cover layer is formed on the optical disc substrate.

As shown in Fig. 15, the optical disc substrate 103 is placed on the turntable 101. At this time, the optical disc substrate 103 is positioned by inserting the rotation shaft 101A of the turntable 101 to an opening 103a which is formed in the center of the optical disc substrate 103.

Next, the film forming liquid supplying device 102 is placed at a predetermined position above the optical disc substrate 103 and the lower face of the disc portion 125 of the fixing portion 102B is in contact with the upper face of the optical disc substrate 103. As a result, the opening 103a of the optical disc substrate 103 is closed by the disc portion 125.

Then, the turntable 101 is rotated at a high speed. At this time, since the cylindrical portion 102A and the insertion portion 102C are enabled to be mutually rotatable by the bearing 128 and the insertion portion 102C is fixed so as not to be rotated, the optical disc substrate 103, the fixing portion 102B, and the cylindrical portion 102A are integrally rotated together with the turntable 101, but the insertion portion 102C and the supply pipe 129 are not rotated. Subsequently, a predetermined amount of an ultraviolet curing resin 104 is then supplied from the supply pipe 129 into the interior 131 of the cylindrical portion 102A. The ultraviolet curing resin 104 is moved by gravity to a lower portion of the cylindrical portion 102A.

Thereafter, an air pressure is applied through the supply pipe 129. At this time, since the airtightness between the cylindrical portion 102A and the insertion portion 102C is maintained by the O-rings 122a and 123a, the pressure of the interior 131 of the cylindrical portion 102A is raised, and the ultraviolet curing resin 104 which is stored in the lower portion of the cylindrical portion 102A is gradually pushed out onto the optical disc substrate 103 through a slit 132 that is formed between the lower end face of the cylindrical portion 102A and the upper face of the disc portion 125. The resin 104 which has passed through the slit 132 is spread toward the outer periphery of the optical disc substrate 103 by the centrifugal force due to rotation of the turntable 101, so that a film of the resin 104 is formed on the surface of the optical disc substrate 103. The width of the slit 132 and the air pressure are set so as to attain an adequate supply speed of the resin 104 in relation to the viscosity and affinity of the resin 104.

In the embodiment, also during rotation of the turntable 101, the ultraviolet curing resin 104 is supplied from the inner peripheral side of the optical disc substrate 103. In the embodiment, therefore, a film of a sufficient thickness is formed in the inner peripheral side of the optical disc substrate 103 in comparison to a case where after the supply of a resin is ended, an unnecessary amount of the resin is spun off by rotation. As a result, a uniform cover layer can be formed over the entire face of the optical disc substrate 103.

Thereafter, the film of the ultraviolet curing resin 104 is irradiated with ultraviolet rays so that the ultraviolet curing resin 104 cures to form a cover layer 104A as shown in Fig. 16. The ultraviolet curing resin 4 which is spun off by rotation of the turntable 1 is recycled and reused.

In the embodiment, the ultraviolet curing resin is supplied by pushing out the resin by using an air pressure. Alternatively, the ultraviolet curing resin may be supplied by using only the centrifugal force due to rotation of the turntable 1 and the weight of the resin 4.

### - Sixth embodiment -

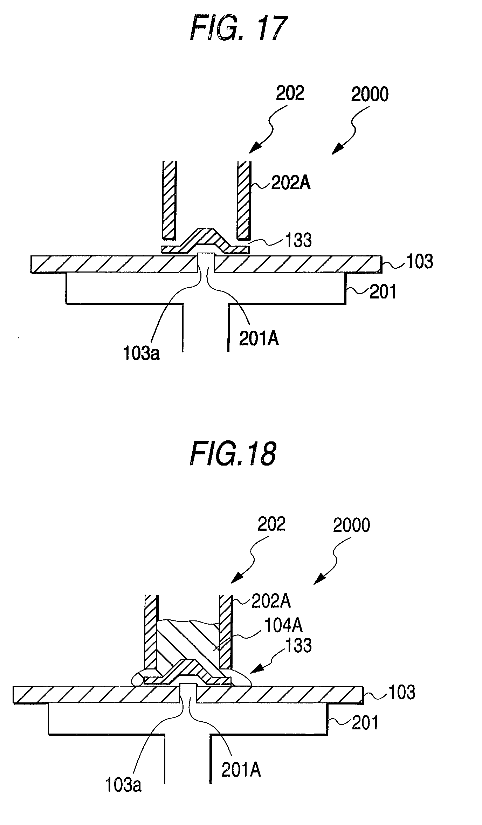

Hereinafter, a film forming apparatus according to a sixth embodiment of the invention will be described with reference to Figs. 17 and 18. Fig. 17 is a section view showing the film forming apparatus of this embodiment.

As shown in Fig. 17, the film forming apparatus 2000 of this embodiment comprises: a turntable 201 of a spin coater on which the optical disc substrate 103 is to be placed; and a film forming liquid supplying device 202 which is placed above the optical disc substrate 103.

The film forming liquid supplying device 202 comprises a cylindrical portion 202A which generally has a substantially cylindrical shape. Slits 133 through which the interior and the exterior of the cylindrical portion 202A communicate with each other are circumferentially formed in a lower portion of the cylindrical portion 202A. In the cylindrical portion 202A, portions which are above and below the slits 33, respectively, are connected to each other by beams that are not shown.

Next, the procedure of forming a cover layer on the optical disc substrate 103 by using the film forming apparatus 2000 will be described with reference to Fig. 18. Fig. 18 is a section view showing a manner of supplying an ultraviolet curing resin by the film forming apparatus 2000.

As shown in Fig. 18, the optical disc substrate 103 is placed on the turntable 201. At this time, the optical disc substrate 103 is positioned by inserting the rotation shaft 101A of the turntable 201 to the opening 103a which is formed in the center of the optical disc substrate 103.

Next, the cylindrical portion 202A is placed at a predetermined position above the optical disc substrate 103. At this time, the cylindrical portion 202A is fixed to the position where the cylindrical portion 202A is not in contact with the optical disc substrate 103 and the rotation shaft 201A.

Then, the turntable 101 is rotated at a high speed. At this time, the optical disc substrate 103 is rotated, but the cylindrical portion 202A is not rotated. A predetermined amount of the ultraviolet curing resin 104 is then supplied into the interior of the cylindrical portion 202A. The ultraviolet curing resin 104 is moved by gravity to a lower portion of the cylindrical portion 202A. Thereafter, an air pressure is applied from an upper portion of the cylindrical portion 202A, whereby the pressure of the interior of the cylindrical portion 102A is raised, so that the ultraviolet curing resin 104 which is stored in the lower portion of the cylindrical portion 202A is gradually pushed out onto the optical disc substrate 103 through a slit 133 that is formed in the cylindrical portion 202A. The resin 104 which has passed through the slit 133 is spread toward the outer periphery of the optical disc substrate 103 by the centrifugal force due to rotation of the turntable 101, so that a film of the resin 104 is formed on the surface of the optical disc substrate 103. The width of the slit 133 and the air pressure are set so as to attain an adequate supply speed of the resin 104 in relation with the viscosity of the resin 104.

In this embodiment, in the same manner as the first embodiment, also during rotation of the turntable 201, the ultraviolet curing resin 104 is supplied from the inner peripheral side of the optical disc substrate 103. Therefore, a film of a sufficient thickness is formed in the inner peripheral side of the optical disc substrate 103. As a result, a uniform cover layer can be formed over the entire face of the optical disc substrate 103.

Thereafter, the film of the ultraviolet curing resin 104 is irradiated with ultraviolet rays, so that the ultraviolet curing resin 104 cures to form a cover layer. The ultraviolet curing resin 104 which is spun off by rotation of the turntable 201 is recycled and reused.

Although, in the fifth and sixth embodiments, formation of a cover film of an optical disc has been described as an example, the invention can be applied to a wide variety of cases where a film of a predetermined thickness is formed by the spin coat method.

The invention is not limited to the above described embodiments. In place of the turntable, a rotating unit for, placed above the substrate, sucking the surface of the substrate and rotating the substrate may be used.

In place of the ultraviolet curing resin, a thermosetting resin may be used.

The supply of the film forming liquid may be performed not only during rotation of the rotating unit but also before the rotation.

## Claims

1. A film forming apparatus comprising:
a rotating unit for rotating a substrate; and
a film forming jig which is to be placed on the substrate,
wherein in a state where a film forming liquid is supplied to contact with an outer periphery of the film forming jig, the rotation unit rotates to form a film.

2. The film forming apparatus according to claim 1, wherein a thickness of the film forming jig is larger than that of the film.

3. The film forming apparatus according to claim 1, wherein the film forming jig has a substantially cylindrical shape.

4. The film forming apparatus according to claim 1, wherein the film forming jig has a substantially conical shape.

5. The film forming apparatus according to claim 1, wherein the film forming jig has a substantially truncated conical shape.

6. A film forming method comprising the steps of:
placing a film forming jig on a substrate;
supplying film forming liquid to be in contact with an outer periphery of the film forming jig; and
rotating the substrate.

7. A film forming apparatus comprising:
a rotating unit for rotating a substrate; and
a film forming liquid supplying device for supplying film forming liquid onto the substrate during rotation of the rotating unit.

8. The film forming apparatus according to claim 7, wherein the substrate has a non-film-forming region to which the film forming liquid is not applied; and
the film forming liquid supplying device supplies the film forming liquid to a region outside the non-film-forming region.

9. The film forming apparatus according to claim 7, wherein the film forming liquid supplying device comprises a liquid reservoir for storing the film forming liquid; and
the film forming liquid stored in the liquid reservoir is supplied onto the substrate through a supply port communicating with the liquid reservoir.

10. The film forming apparatus according to claim 8, wherein the film forming liquid supplying device has a cover portion for covering the non-film-forming region of the substrate.

11. The film forming apparatus according to claim 10, wherein the cover portion has a truncated conical shape.

12. The film forming apparatus according to claim 9, wherein the film forming liquid is supplied through the supply port by applying an air pressure to the film forming liquid stored in the liquid reservoir.

13. The film forming apparatus according to claim 9, wherein the liquid reservoir is rotatable together with the rotating unit.

14. The film forming apparatus according to claim 13, wherein the film forming liquid is supplied through the supply port by applying a centrifugal force due to the rotation of the rotating unit to the film forming liquid stored in the liquid reservoir.

15. The film forming apparatus according to claim 1, wherein the substrate is an optical disc substrate.

16. A film forming method comprising the steps of supplying a film forming liquid onto a substrate while the substrate is rotated.

17. The film forming method according to claim 16, wherein the substrate has a non-film-forming region to which the film forming liquid is not applied; and
in the supplying step, the film forming liquid is supplied to a region outside the non-film-forming region.

18. The film forming method according to claim 16, further comprises the steps of storing the film forming liquid into a liquid reservoir,
wherein in the supplying step, the film forming liquid stored in the liquid reservoir is supplied onto the substrate through a supply port communicating with the liquid reservoir.

19. The film forming method according to claim 16 wherein in the supplying step, the film forming liquid is supplied through the supply port by applying an air pressure to the film forming liquid stored in the liquid reservoir.

20. The film forming method according to claim 18, wherein the liquid reservoir is rotatable together with the substrate.

21. The film forming method according to claim 20, wherein the film forming liquid is supplied through the supply port by applying a centrifugal force due to the rotation to the film forming liquid stored in the liquid reservoir.

22. The film forming method according to any one of claims 16, wherein the substrate is an optical disc substrate.
